# FASCICULE DE BREVET EUROPEEN

(11) **EP 3 651 963 B1**
(45) Date de publication et mention de la délivrance du brevet: **01.09.2021**
(21) Numéro de dépôt: 18752548.0
(22) Date de dépôt: 02.07.2018
(51) Int. Cl.: B29C 45/16, B29D 30/06, B29D 30/66, B29C 45/14, B29K 21/00, B29L 30/00

(54) **PROCÉDÉ DE FABRICATION D'UN BANDAGE PNEUMATIQUE**
VERFAHREN ZUR HERSTELLUNG EINES LUFTREIFENS
METHOD FOR MANUFACTURING A PNEUMATIC TYRE

(30) Priorité: 11.07.2017 FR 1756540
(43) Date de publication de la demande: 20.05.2020
(73) Titulaire: Compagnie Générale des Etablissements Michelin, 63000 Clermont-Ferrand (FR)
(72) Inventeur: PIALOT, Frédéric, 63040 Clermont Ferrand Cedex 9 (FR); FABRE, Thomas, 63040 Clermont Ferrand Cedex 9 (FR); WIEL, Pierre, 63040 Clermont Ferrand Cedex 9 (FR)
(74) Mandataire: Redouté, Gilles Pierre
(86) Numéro de dépôt international: PCT/FR2018/051634
(87) Numéro de publication internationale: WO 2019/012201

(56) Documents cités:
- EP-A1- 2 554 362
- EP-A1- 2 620 297
- EP-A1- 2 625 028
- EP-A1- 2 965 923
- WO-A1-01/17800
- DE-A1- 2 658 374
- FR-A1- 2 391 063
- JP-A- H07 329 065

## Description

### DOMAINE TECHNIQUE DE L'INVENTION

La présente invention se rapporte à un procédé de fabrication d'un bandage pneumatique et plus particulièrement un tel bandage ne comportant pas de matériau caoutchoutique à base d'élastomère diénique.

### ARRIÈRE-PLAN TECHNIQUE DE L'INVENTION

Les bandages pneumatiques sont habituellement formés de parties en matériaux caoutchoutiques comme des élastomères diéniques vulcanisables qui sont assemblées. Les bandages pneumatiques crus sont généralement fabriqués à partir de tambours en suivant des étapes connues de confection à plat sur un premier tambour de conformation puis sur un deuxième tambour de finition. Une étape finale de cuisson permet à la matière crue plastique de devenir élastique notamment par vulcanisation. Un tel procédé de fabrication dure traditionnellement environ vingt minutes pour un bandage pneumatique tourisme.

En effet, le temps de cuisson est directement influencé par la masse du bandage pneumatique et donc du type de bandage pneumatique. Ainsi, pour un bandage pneumatique tourisme d'une dizaine de kilogrammes, le temps de cuisson est de l'ordre de dix minutes alors que pour des bandages pneumatiques poids lourds ou pour le génie civil pesant de plusieurs dizaines de kilogrammes jusqu'à plusieurs tonnes, le temps de cuisson varie de quarante minutes à plusieurs jours.

Pour des raisons écologique et qualitative, ces matériaux caoutchoutiques ont toujours besoin d'être optimisés afin de diminuer leur résistance au roulement et d'améliorer leurs performances (tenue chimique, tenue mécanique, etc.) tout en améliorant leur recyclabilité.

Les documents EP 2 554 362 et EP 2 965 923 divulguent des exemples de demi-ébauches de structures de bandages pneumatiques formés à base d'élastomère thermoplastique.

### RÉSUMÉ DE L'INVENTION

L'invention a pour but de fournir un nouveau procédé de fabrication d'un nouveau type de bandage pneumatique permettant de modifier significativement le coût de mise en œuvre du procédé, les performances du bandage pneumatique ainsi que sa recyclabilité.

À cet effet, l'invention se rapporte à un procédé de fabrication d'un bandage pneumatique comportant les étapes suivantes :
a) former une carcasse à partir d'au moins un premier matériau à base d'élastomère thermoplastique ;
b) former, sur la carcasse, au moins une zone basse à partir d'au moins un deuxième matériau à base d'élastomère thermoplastique ;
**caractérisé en ce que** le procédé comprend, en outre, l'étape suivante :
c) former, sur l'ensemble obtenu lors de l'étape b), une partie supplémentaire à partir d'au moins un troisième matériau à base d'élastomère thermoplastique afin d'obtenir un bandage pneumatique qui comprend une bande de roulement formée lors de l'étape b) ou de l'étape c) à partir d'un matériau à base d'élastomère thermoplastique.

Avantageusement selon l'invention, le procédé met en oeuvre de nouveaux types de matériaux à base d'un (ou plusieurs) élastomère(s) thermoplastique(s) (appelés parfois TPE provenant des termes anglais « thermoplastic elastomer »). On comprend donc que ces matériaux utilisés dans la fabrication du bandage pneumatique remplacent les matériaux caoutchoutiques traditionnels. Selon l'invention, le remplacement concerne, de manière avantageuse, la totalité du bandage pneumatique.

De plus, avantageusement selon l'invention, la bande de roulement est formée de préférence par injection, préférentiellement par surmoulage, lors de l'étape b) ou de l'étape c), à partir d'un matériau à base d'élastomère thermoplastique.

L'utilisation de ces matériaux à base d'élastomère thermoplastique permet en effet de modifier significativement les coûts de réalisation du bandage pneumatique ainsi que les performances finales. À titre d'exemple, la résistance au roulement, la tenue aux agressions extérieures (griffure, ozone, oxydation, etc.) peuvent être notablement améliorées par rapport aux matériaux caoutchoutiques. En outre, ils sont recyclables.

Enfin, il n'est plus nécessaire de réaliser l'étape de cuisson qui peut durer pour un bandage pneumatique tourisme entre dix et quinze minutes. On comprend donc que le procédé est très raccourci par rapport au procédé de fabrication à base de matériaux caoutchoutiques.

Selon d'autres caractéristiques optionnelles de réalisation de l'invention :
- L'étape a) comporte les phases a1): fabriquer une nappe carcasse et deux tringles, a2) : injecter, dans un moule de carcasse, le premier matériau à base d'élastomère thermoplastique en surmoulant ce premier matériau autour de la nappe carcasse et des deux tringles afin de former la carcasse, a3) : refroidir, dans le moule de carcasse, l'ensemble obtenu lors de l'étape a2), et a4) : libérer la carcasse ainsi formée du moule de carcasse ;
- Selon une première variante, l'étape b) comporte les phases b1) : fabriquer au moins une nappe de renfort, b2) : injecter, dans un moule de zones basses, le deuxième matériau à base d'élastomère thermoplastique en surmoulant ce deuxième matériau sur la nappe de renfort afin de former les zones basses et une bande de roulement sur la carcasse, b3) : refroidir, dans le moule de zones basses, l'ensemble obtenu lors de l'étape b2), et b4) : libérer l'ensemble obtenu lors de l'étape b2) du moule de zones basses ;
- Selon une première variante, l'étape c) comporte les phases c1) : injecter, dans un moule de partie supplémentaire, le troisième matériau à base d'élastomère thermoplastique afin de former des flancs extérieurs, c2) : refroidir, dans le moule de partie supplémentaire, l'ensemble obtenu lors de l'étape c1), et c3) : libérer le bandage pneumatique ainsi formé du moule de partie supplémentaire ;
- Selon une deuxième variante, l'étape b) comporte les phases b5) : injecter, dans un moule de zones basses, le deuxième matériau à base d'élastomère thermoplastique afin de former les zones basses sur la carcasse, b6) : refroidir, dans le moule de zones basses, l'ensemble obtenu lors de l'étape b5), et b7) : libérer l'ensemble obtenu lors de l'étape b5) du moule de zones basses ;
- Selon une deuxième variante, l'étape c) comporte les phases c4) : fabriquer au moins une nappe de renfort, c5) : injecter, dans un moule de partie supplémentaire, le troisième matériau à base d'élastomère thermoplastique en surmoulant ce troisième matériau sur la nappe de renfort afin de former des flancs extérieurs et une bande de roulement, c6) : refroidir, dans le moule de partie supplémentaire, l'ensemble obtenu lors de l'étape c5), et c7) : libérer le bandage pneumatique ainsi formé du moule de partie supplémentaire ;
- Selon une troisième variante, l'étape b) comporte les phases b8) : injecter, dans un moule de zones basses, le deuxième matériau à base d'élastomère thermoplastique afin de former les zones basses et des flancs extérieurs sur la carcasse, b9) : refroidir, dans le moule de zones basses, l'ensemble obtenu lors de l'étape b8), et b10) : libérer l'ensemble obtenu lors de l'étape b8) du moule de zones basses ;
- Selon une troisième variante, l'étape c) comporte les phases c4) : fabriquer au moins une nappe de renfort, c8) : injecter, dans un moule de partie supplémentaire, le troisième matériau à base d'élastomère thermoplastique en surmoulant ce troisième matériau sur la nappe de renfort afin de former une bande de roulement, c9) : refroidir, dans le moule de partie supplémentaire, l'ensemble obtenu lors de l'étape c8), et c10) : libérer le bandage pneumatique ainsi formé du moule de partie supplémentaire ;
- Chaque moule est formé à partir d'un bâti agencé pour recevoir des éléments amovibles dédiés à chaque étape a), b) et c) ;
- Chaque moule est maintenu à une température inférieure à 35 degrés Celsius pendant la mise en oeuvre du procédé ;
- Chaque phase de refroidissement permet la rigidification d'au moins la surface externe du matériau à base d'élastomère thermoplastique utilisé en le refroidissant en-dessous d'une température déterminée fonction du matériau à base d'élastomère thermoplastique utilisé ;
- La température déterminée est la température de transition vitreuse ou la température de fusion du bloc thermoplastique du matériau à base d'élastomère thermoplastique utilisé.

### BRÈVE DESCRIPTION DES DESSINS

D'autres particularités et avantages ressortiront clairement de la description qui en est faite ci-après, à titre indicatif et nullement limitatif, en référence aux dessins annexés, dans lesquels :
- La figure 1 est une vue en coupe partielle d'un bandage pneumatique obtenu selon un procédé de l'invention ;
- La figure 2 est une vue en coupe d'un noyau et d'un premier moule utilisés pour la mise en œuvre d'un premier mode de réalisation du procédé selon l'invention ;
- La figure 3 est une vue en coupe partielle du noyau monté dans le premier moule avant la mise en oeuvre de la première étape du premier mode de réalisation du procédé selon l'invention ;
- La figure 4 est une vue en coupe partielle du noyau monté dans un deuxième moule avant la mise en oeuvre de la deuxième étape selon une variante du premier mode de réalisation du procédé selon l'invention ;
- La figure 5 est une vue en coupe partielle de l'ensemble obtenu après la mise en oeuvre de la deuxième étape selon la variante du premier mode de réalisation du procédé selon l'invention ;
- La figure 6 est une vue en coupe partielle du noyau monté dans un troisième moule avant la mise en oeuvre de la troisième étape selon la variante du premier mode de réalisation du procédé selon l'invention ;
- La figure 7 est une vue en coupe partielle de l'ensemble obtenu après la mise en oeuvre de la troisième étape de la variante du premier mode de réalisation du procédé selon l'invention ;
- La figure 8 est une vue en coupe partielle d'un noyau et d'un bâti utilisés pour la mise en oeuvre d'un deuxième mode de réalisation du procédé selon l'invention ;
- La figure 9 est une vue en coupe partielle du noyau monté dans le bâti avec un premier jeu de tiroirs avant la mise en oeuvre de la première étape du deuxième mode de réalisation du procédé selon l'invention ;
- La figure 10 est une vue en perspective éclatée d'une partie du bâti et d'une partie du premier jeu de tiroirs pour la mise en oeuvre de la première étape du deuxième mode de réalisation du procédé selon l'invention ;
- La figure 11 est une vue en coupe partielle du noyau monté dans le bâti avec un dernier jeu de tiroirs avant la mise en œuvre de la troisième étape selon une variante du deuxième mode de réalisation du procédé selon l'invention.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

Par « matériau caoutchoutique », on entend un matériau thermodurcissable tel un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement », on entend une quantité de matériau délimitée par des surfaces latérales et par deux surfaces principales dont l'une, appelée surface de roulement, est destinée à entrer en contact avec une chaussée lorsque le pneumatique roule.

Par « carcasse », on entend la gomme intérieure imperméable à l'air, les tringles, les bourrages tringle, les pieds sommet et la nappe carcasse.

Par « matériau à base d'élastomère thermoplastique », on entend un matériau comportant tout ou partie de copolymères à blocs, constitués de blocs rigides, thermoplastiques, reliés par des blocs souples, élastomères. De tels matériaux présentent un comportement mécanique à la fois d'un élastomère et d'un polymère thermoplastique.

On utilisera, pour la définition des blocs thermoplastiques, la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semicristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température déterminée pour la mise oeuvre.

Les blocs élastomères peuvent être tous les élastomères connus de l'homme de l'art.

À titre d'exemple nullement limitatif de matériau à base d'élastomère thermoplastique on peut citer par exemple des matériaux comportant au moins en partie des blocs du type SIS, SBS, SEBS ou SIBS (cf. référence AM3400 V1, « Élastomères thermoplastiques (TPE) », Michel Biron, Techniques de l'ingénieur, 10 juillet 2000).

L'invention s'applique à tout type de bandage pneumatique, notamment ceux destinés à équiper des véhicules à moteur de type tourisme, SUV (« Sport Utility Vehicles »), deux roues (notamment motos), avions, véhicules industriels choisis parmi camionnettes, "Poids-lourds" - c'est-à-dire métro, bus, engins de transport routier (camions, tracteurs, remorques), véhicules hors-la-route tels qu'engins agricoles ou de génie civil -, ou autres véhicules de transport ou de manutention.

L'invention se rapporte à un procédé de fabrication d'un bandage pneumatique 1 formé à partir de matériaux à base d'élastomère thermoplastique.

Selon un premier mode de réalisation, le procédé comporte une première étape a) destinée à former une carcasse 3 à partir d'au moins un premier matériau à base d'élastomère thermoplastique, une deuxième étape b) destinée à former sur la carcasse 3, au moins une zone basse 10 à partir d'au moins un deuxième matériau à base d'élastomère thermoplastique puis une troisième étape c) destinée à former, sur l'ensemble obtenu lors de l'étape b), une partie supplémentaire à partir d'au moins un troisième matériau à base d'élastomère thermoplastique afin d'obtenir un bandage pneumatique 1 qui comprend une bande de roulement 7 formée lors de l'étape b) ou de l'étape c) à partir d'un matériau à base d'élastomère thermoplastique.

En effet, contrairement au procédé habituel de fabrication sur tambour dans lequel il est utilisé des matériaux caoutchoutiques vulcanisables, dans le procédé selon l'invention, tout le bandage pneumatique 1 est destiné à être fabriqué à partir de matériaux à base d'élastomère thermoplastique et selon les géométries finales, c'est-à-dire notamment sans étape de conformation. Le premier mode de réalisation peut comporter plusieurs variantes suivant les éléments formés lors des étapes b) et c). Préférentiellement, les étapes a), b) et/ou c) peuvent être obtenues par coulage ou par injection dans un moule 9₁, 9₂, 9₃.

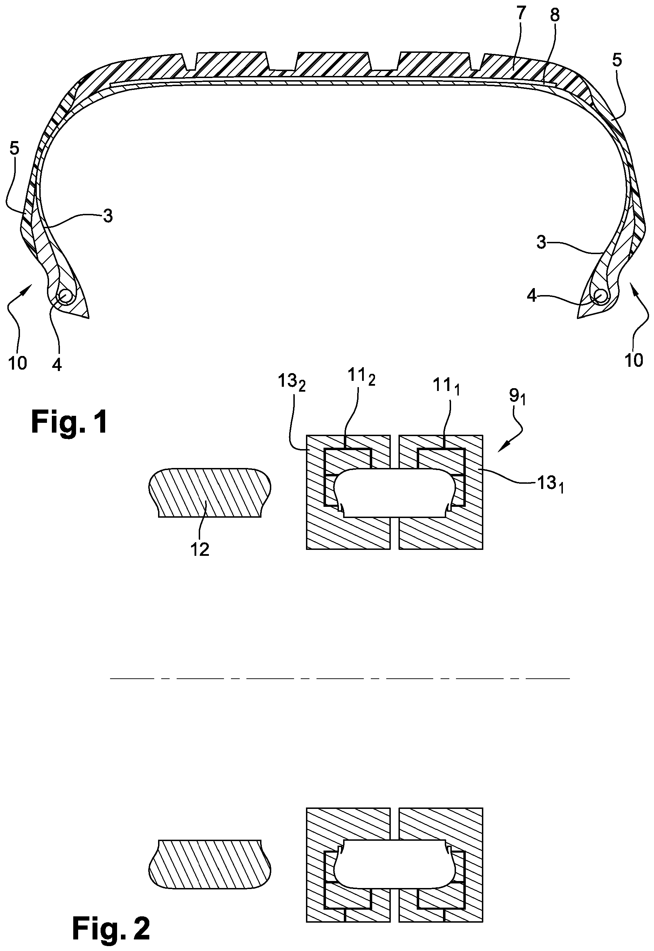

L'étape a) peut ainsi comporter une première phase a1) destinée à fabriquer des matériaux à base d'élastomère thermoplastique notamment pour former une gomme intérieure 6 imperméable à l'air, une nappe carcasse 2 et deux tringles 4. L'étape a) peut ensuite comporter une deuxième phase a2) destinée à injecter, dans un premier moule 9₁, ou moule de carcasse 3, illustré en coupe à la figure 2, le premier matériau à base d'élastomère thermoplastique en surmoulant ce premier matériau autour de la nappe carcasse 2 et les deux tringles 4 réalisés lors de la phase a1), afin de former la carcasse 3. À ce titre, on comprend que les matériaux caoutchoutiques et le butyle de la gomme imperméable sont remplacés par un (ou plusieurs) matériau(x) à base d'élastomère thermoplastique.

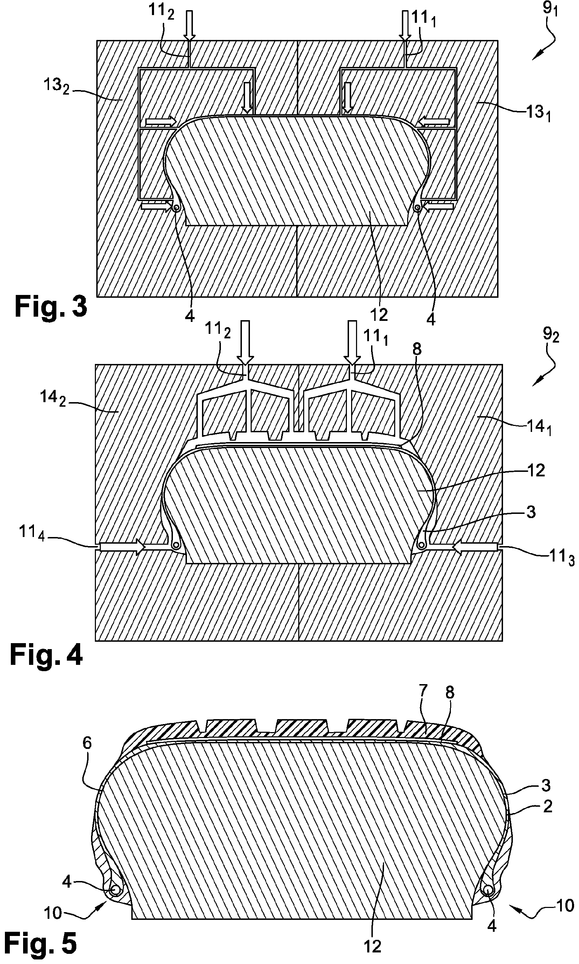

À titre nullement limitatif, un exemple de moule 9₁ selon l'invention est représenté aux figures 2 et 3. Il comporte un noyau 12 destiné à former la géométrie interne du futur bandage pneumatique 1 et deux flancs 13₁, 13₂ destinés à entièrement recouvrir le noyau 12. Comme visible à la figure 3, les flancs 13₁, 13₂ du moule 9₁ comportent chacun dans leur partie supérieure des conduites sommet 11₁, 11₂ pour alimenter le moule 9₁ en matériau à base d'élastomère thermoplastique. Préférentiellement, lors de l'étape a), le moule 9₁ est maintenu à une température inférieure à 35 degrés Celsius et, de manière encore plus préférée, autour de 20 degrés Celsius.

La deuxième phase a2) peut ainsi comporter le dépôt sur le noyau 12 d'un matériau à base d'élastomère thermoplastique imperméable à l'air formant une gomme intérieure 6 puis l'ajustage de la nappe carcasse 2 sur cette gomme intérieure 6. Le matériau à base d'élastomère thermoplastique imperméable à l'air peut, par exemple, comporter des blocs du type SIBS. De plus, la nappe carcasse 2 peut comporter un composite à base de verre et/ou un composite à base de fibres de carbone et/ou un tissu tramé et/ou un métal suivant le type de bandage pneumatique.

Comme visible à la figure 3, chaque tringle 4, préférentiellement métallique, est par ailleurs positionnée dans un des flancs 13₁, 13₂ à l'aide par exemple de cales afin de garder un espacement sensiblement régulier par rapport à chaque flanc 13₁, 13₂ associé. On remarque que l'interstice, laissé entre l'ensemble noyau 12 - gomme intérieure 6 - nappe carcasse 2 et les flancs 13₁, 13₂, forme alors l'espace d'injection souhaité. La deuxième phase a2) peut comporter ensuite l'injection principale du matériau à base d'élastomère thermoplastique du reste de la carcasse 3 afin de former cette dernière.

Le matériau peut ainsi être injecté dans les conduites sommet 11₁, 11₂ du moule 9₁ pour remplir l'interstice formé entre l'ensemble noyau 12 - gomme intérieure 6 - nappe carcasse 2 et les deux flancs 13₁, 13₂. L'injection (ou les injections) est préférentiellement réalisée à une température déterminée de mise en oeuvre sensiblement supérieure à la température de transition vitreuse (ou de fusion le cas échéant) du bloc thermoplastique du matériau injecté, comme, par exemple, supérieure à 200°C et est très rapide comme, par exemple, un temps inférieur à 10 secondes et, préférentiellement, autour de 2 secondes.

Préférentiellement, le (ou les) matériau(x) injecté(s) et plus généralement la carcasse 3 obtenue, est maintenu dans le moule 9₁ dans une phase a3) afin de le refroidir en-dessous de la température de transition vitreuse (ou de fusion le cas échéant) du bloc thermoplastique du matériau à base d'élastomère thermoplastique pendant un temps inférieur à 60 secondes grâce à l'échange thermique avec le moule 9₁ maintenu à une température inférieure à 35 degrés Celsius comme expliqué ci-dessus.

Ainsi, il est souhaité de garantir le refroidissement d'au moins de la surface externe du (ou des) matériau(x) injecté(s), c'est-à-dire la surface en contact avec le moule 9₁, afin d'être suffisamment rigide pour ne pas coller au moule 9₁ et, par conséquent, faciliter sa libération. Bien entendu, suivant le type de bandage pneumatique (notamment son épaisseur) et la géométrie du moule 9₁, il peut également être souhaité que le refroidissement soit plus ou moins profond afin que la matière au centre de la carcasse 3 ne se déforme pas lors de la future libération du moule 9₁.

À titre d'exemple, l'étape d'injection peut ainsi durer environ deux secondes et l'étape de refroidissement entre dix et vingt secondes pour la formation de la carcasse 3 d'un bandage pneumatique tourisme.

Enfin, l'étape a) se termine avec la phase a4) destinée à libérer la carcasse 3 ainsi formée du premier moule 9₁. On comprend donc que l'étape a) permet la fabrication de la carcasse 3, c'est-à-dire la gomme intérieure 6, les tringles 4, les bourrages tringle, les pieds sommet et la nappe carcasse 2, en même temps et non en une multitude d'étapes à plat sur un tambour comme les bandages pneumatiques actuels à base de matériaux caoutchoutiques. La liaison entre les éléments de la carcasse 3 est favorisée par les pressions atteintes lors de l'injection préférentiellement supérieure à 1000 bars et la bonne mouillabilité du matériau à base d'élastomère thermoplastique qui, grâce à la température d'injection, se trouve dans sa phase liquide.

Selon une première variante du premier mode de réalisation, l'étape b) peut comporter une première phase b1) destinée à fabriquer au moins une nappe de renfort 8. L'étape b) peut ensuite comporter une deuxième phase b2) destinée à injecter, dans un deuxième moule 9₂, ou moule de zones basses 10, comme illustré à la figure 4, le deuxième matériau à base d'élastomère thermoplastique en surmoulant ce deuxième matériau sur la nappe de renfort 8 afin de former les zones basses 10 et une bande de roulement 7 sur la carcasse 3.

À titre nullement limitatif, un exemple de moule 9₂ selon l'invention est représenté à la figure 4. Il comporte le noyau 12 revêtu de la carcasse 3 formée à l'étape a) et deux flancs 14₁, 14₂ recouvrant le noyau 12 et s'appuyant sur la carcasse 3 entre les futures zones basses 10 et la future bande de roulement 7. Comme visible à la figure 4, les flancs 14₁, 14₂ du moule 9₂ comporte chacun dans leur partie supérieure des conduites sommets 11₁, 11₂ et latéralement des conduites périphériques 11₃, 11₄ pour alimenter le moule 9₂ en matériaux à base d'élastomère thermoplastique.

Plus particulièrement, lors de la phase b2), un matériau à base d'élastomère thermoplastique est injecté pour former les zones basses 10 et un autre matériau à base d'élastomère thermoplastique est injecté pour former la bande de roulement 7 afin d'optimiser leurs fonctions respectives, c'est-à-dire que les matériaux à base d'élastomère thermoplastique peuvent être différents et dédiés à leurs fonctions. Plus précisément, le matériau des zones basses 10 doit être adapté au montage/démontage du bandage pneumatique 1 sur la roue, ou jante, (non représentée) mais également au passage de couple du moteur. Le matériau de la bande de roulement 7 doit lui être optimisé pour son contact avec le sol notamment quant à son adhérence sur sols sec et humide, son usure et son énergie (bruit et consommation). Toutefois, rien n'empêche que le même matériau à base d'élastomère thermoplastique soit utilisé pour les zones basses 10 et la bande de roulement 7.

Préférentiellement, le matériau des zones basses 10 est ainsi injecté par les conduites périphériques 11₃, 11₄ du moule 9₂ alors que le matériau de la bande de roulement 7 est injecté par les conduites sommet 11₁, 11₂ du moule 9₂ qui se ramifient pour remplir l'interstice formé entre la carcasse 3 et le sommet du moule 9₂ selon plusieurs ouvertures débouchant en faisant face à la carcasse 3. Avantageusement selon l'invention, les deux flancs 14₁, 14₂ s'appuyant sur la carcasse 3 entre les futures zones basses 10 et la future bande de roulement 7, chaque matériau injecté est isolé dans son interstice dédié du moule 9₂ et ne peut pas se mélanger avec un autre.

Préférentiellement, lors de l'étape b), le moule 9₂ est maintenu à une température inférieure à 35 degrés Celsius et, de manière encore plus préférée, autour de 20 degrés Celsius.

La deuxième phase b2) peut ainsi comporter l'ajustage sur la surface supérieure de la carcasse 3 de la nappe de renfort 8. La nappe de renfort 8 peut comporter des nappes sommet de travail et une frette, et être formée d'un composite à base de verre et/ou d'un composite à base de fibres de carbone et/ou d'un tissu tramé et/ou d'un métal suivant le type de bandage pneumatique.

On remarque que l'interstice, laissé entre la carcasse 3 et les flancs 14₁, 14₂, forme alors trois espaces distincts. La deuxième phase b2) peut comporter ensuite les injections proprement dites des matériaux à base d'élastomère thermoplastique sur la carcasse 3.

Les matériaux peuvent ainsi être injectés dans les conduites sommet 11₁, 11₂ et les conduites périphériques 11₃, 11₄ du moule 9₂ pour remplir les trois espaces distincts. Chaque injection est préférentiellement réalisée à une température de mise en oeuvre choisie sensiblement supérieure à la température de transition vitreuse (ou de fusion le cas échéant) du bloc thermoplastique du matériau injecté, comme, par exemple, supérieure à 200°C et est très rapide comme, par exemple, un temps inférieur à 10 secondes et, préférentiellement, autour de 2 secondes.

Préférentiellement, le (ou les) matériau(x) injecté(s) est maintenu dans le moule 9₂ dans une phase b3) afin de le refroidir en-dessous de la température de transition vitreuse (ou de fusion le cas échéant) du bloc thermoplastique du matériau à base d'élastomère thermoplastique pendant un temps inférieur à 60 secondes grâce à l'échange thermique avec le moule 9₂ maintenu à une température inférieure à 35 degrés Celsius comme expliqué ci-dessus.

Ainsi, il est souhaité de garantir le refroidissement d'au moins de la surface externe du (ou des) matériau(x) injecté(s), c'est-à-dire la surface en contact avec le moule 9₂, afin d'être suffisamment rigide pour ne pas coller au moule 9₂ et, par conséquent, faciliter sa libération. Bien entendu, suivant le type de bandage pneumatique (notamment son épaisseur) et la géométrie du moule 9₂, il peut également être souhaité que le refroidissement soit plus ou moins profond afin que la matière au centre des zones basses 10 et de la bande de roulement 7 ne se déforme pas lors de la future libération du moule 9₂.

À titre d'exemple, l'étape d'injection peut ainsi durer environ deux secondes et l'étape de refroidissement entre trente et quarante secondes pour la formation des zones basses 10 et de la bande de roulement 7 d'un bandage pneumatique tourisme.

Enfin, l'étape b) se termine avec la phase b4) destinée à libérer l'ensemble obtenu lors de l'étape b2) du deuxième moule 9₂. On comprend donc que l'étape b) permet la solidarisation des zones basses 10 et de la bande de roulement 7 sur la carcasse 3, c'est-à-dire avec la nappe de renfort 8, la bande de roulement 7 et les protections de montage/démontage en même temps, et non avec une étape de conformation suivie d'une pluralité d'étapes sur un tambour comme les bandages pneumatiques actuels à base de matériaux caoutchoutiques.

Un exemple de produit obtenu selon l'étape b) est illustré à la figure 5. La liaison sur la carcasse 3 est favorisée par les pressions atteintes lors de l'injection préférentiellement supérieure à 1000 bars et la bonne mouillabilité des matériaux à base d'élastomère thermoplastique qui, grâce à la température d'injection, se trouve dans leur phase liquide.

Selon la première variante du premier mode de réalisation, l'étape c) peut comporter une première phase c1) destinée à injecter, dans un troisième moule 9₃, ou moule de de partie supplémentaire, le troisième matériau à base d'élastomère thermoplastique afin de former des flancs extérieurs 5.

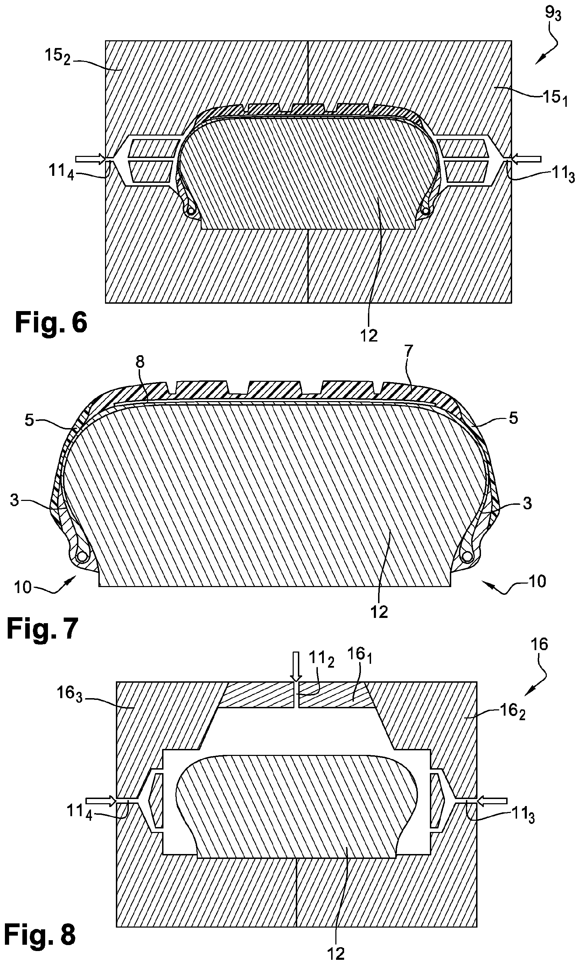

À titre nullement limitatif, un exemple de moule 9₃ selon l'invention est représenté à la figure 6. Il comporte le noyau 12 revêtu de l'ensemble carcasse 3 - bande de roulement 7 - zones basses 10 formé à l'étape b) et deux flancs 15₁, 15₂ recouvrant le noyau 12 et s'appuyant sur l'ensemble formé à l'étape b) entre les futures flancs extérieurs 5. Comme visible à la figure 6, les flancs 15₁, 15₂ du moule 9₃ comporte chacun latéralement des conduites périphériques 11₃, 11₄ pour alimenter le moule 9₃ en matériaux à base d'élastomère thermoplastique.

Plus particulièrement, lors de la phase c1), un matériau à base d'élastomère thermoplastique est injecté pour former les flancs extérieurs 5. Plus précisément, le matériau doit afficher une esthétique avantageuse pour recevoir les marquages réglementaires et être très résistant aux agressions mécaniques et chimiques (griffure, ozone, oxydation, etc.).

Préférentiellement, le matériau des flancs extérieurs 5 est ainsi injecté par les conduites périphériques 11₃, 11₄ du moule 9₃ qui se ramifient pour remplir l'interstice formé entre l'ensemble formé à l'étape b) et le moule 9₃ selon plusieurs ouvertures débouchant en faisant face à l'ensemble formé à l'étape b). Avantageusement selon l'invention, les deux flancs 15₁, 15₂ s'appuyant sur l'ensemble formé à l'étape b) entre la bande de roulement 7 et les zones basses 10, chaque matériau injecté est isolé dans son interstice dédié du moule 9₃ et ne peut pas se mélanger avec l'autre. On remarque que l'interstice formé entre l'ensemble formé à l'étape b) et les flancs 15₁, 15₂ forme deux espaces distincts.

Préférentiellement, lors de l'étape c), le moule 9₃ est maintenu à une température inférieure à 35 degrés Celsius et, de manière encore plus préférée, autour de 20 degrés Celsius. Les matériaux peuvent ainsi être injectés dans les conduites périphériques 11₃, 11₄ du moule 9₃ pour remplir les deux espaces distincts. Chaque injection est préférentiellement réalisée à une température de mise en oeuvre choisie sensiblement supérieure à la température de transition vitreuse (ou de fusion le cas échéant) du bloc thermoplastique du matériau injecté, comme, par exemple, supérieure à 200°C et est très rapide comme, par exemple, un temps inférieur à 10 secondes et, préférentiellement, autour de 2 secondes. Préférentiellement, le même matériau à base d'élastomère thermoplastique est utilisé pour chaque flanc extérieur 5. Toutefois, rien n'empêche que des matériaux différents à base d'élastomère thermoplastique soient utilisés pour chaque flanc extérieur 5.

Préférentiellement, le (ou les) matériau(x) injecté(s) est maintenu dans le moule 9₃ dans une phase c2) afin de le refroidir en-dessous de la température de transition vitreuse (ou de fusion le cas échéant) du bloc thermoplastique du matériau à base d'élastomère thermoplastique pendant un temps inférieur à 60 secondes grâce à l'échange thermique avec le moule 9₃ maintenu à une température inférieure à 35 degrés Celsius comme expliqué ci-dessus.

Ainsi, il est souhaité de garantir le refroidissement d'au moins de la surface externe du (ou des) matériau(x) injecté(s), c'est-à-dire la surface en contact avec le moule 9₃, afin d'être suffisamment rigide pour ne pas coller au moule 9₃ et, par conséquent, faciliter sa libération. Bien entendu, suivant le type de bandage pneumatique (notamment son épaisseur) et la géométrie du moule 9₃, il peut également être souhaité que le refroidissement soit plus ou moins profond afin que la matière au centre des flancs extérieurs 5 ne se déforme pas lors de la future libération du moule 9₃.

À titre d'exemple, l'étape d'injection peut ainsi durer environ deux secondes et l'étape de refroidissement entre dix et vingt secondes pour la formation des flancs extérieurs 5 d'un bandage pneumatique tourisme.

Enfin, l'étape c) se termine avec la phase c3) destinée à libérer le bandage pneumatique 1 ainsi formé du troisième moule 9₃. On comprend donc que l'étape c) permet la fabrication des flancs extérieurs 5 en même temps et non en plusieurs d'étapes sur un tambour de conformation comme les bandages pneumatiques actuels à base de matériaux caoutchoutiques.

Un exemple de produit obtenu selon l'étape c) est illustré aux figures 1 et 7. La liaison des différents éléments du bandage pneumatique 1 est favorisée par les pressions atteintes lors de l'injection préférentiellement supérieure à 1000 bars et la bonne mouillabilité des matériaux à base d'élastomère thermoplastique qui, grâce à la température d'injection, se trouvent dans leurs phases liquides.

Avantageusement selon l'invention, le procédé met en oeuvre de nouveaux types de matériaux à base d'un (ou plusieurs) élastomère(s) thermoplastique(s) (TPE). On comprend donc que ces matériaux utilisés dans la fabrication du bandage pneumatique 1 remplacent les matériaux caoutchoutiques traditionnels. Selon l'invention, le remplacement concerne, de manière avantageuse, la totalité du bandage pneumatique 1.

L'utilisation de ces matériaux à base d'élastomère thermoplastique permet en effet de modifier significativement les coûts de réalisation du bandage pneumatique 1 ainsi que ses performances finales. À titre d'exemple, la résistance au roulement, la tenue aux agressions extérieures (griffure, ozone, oxydation, etc.) peuvent être notablement améliorées par rapport aux matériaux caoutchoutiques. En outre, ils sont recyclables.

Enfin, il n'est plus nécessaire de réaliser une étape finale de cuisson, notamment pour effectuer la vulcanisation, qui dure en général entre dix et quinze minutes pour un bandage pneumatique tourisme. On comprend donc que le procédé est très raccourci par rapport au procédé de fabrication à base de matériaux caoutchoutiques à base d'élastomères diéniques.

Comme expliqué ci-dessus, le premier mode de réalisation de réalisation peut comporter plusieurs variantes suivant les éléments formés lors des étapes b) et c). On comprend en effet que le premier mode de réalisation ne saurait se limiter à la première variante mais peut comporter d'autres variantes suivant l'enchaînement de fabrication des zones basses 10, de la bande de roulement 7 et des flancs extérieurs 5.

À titre nullement limitatif, selon une deuxième variante non illustrée, l'étape a) est préférentiellement identique à celle de la première variante. L'étape b) pourrait par contre comporter les phases b5) destinée à injecter, dans un deuxième moule 9₂, ou moule de zones basses 10, le deuxième matériau à base d'élastomère thermoplastique afin de former uniquement la zone basse 10 sur la carcasse 3, b6) destinée à refroidir l'ensemble obtenu lors de l'étape b5) dans le deuxième moule 9₂ puis b7) destinée à libérer l'ensemble obtenu lors de l'étape b5) du deuxième moule 9₂. La deuxième variante pourrait comporter l'étape c) selon les phases c4) destinée à fabriquer au moins une nappe de renfort 8, c5) destinée à injecter, dans un troisième moule 9₃, ou moule de partie supplémentaire, le troisième matériau à base d'élastomère thermoplastique en surmoulant ce troisième matériau sur la nappe de renfort 8 afin de former des flancs extérieurs 5 et une bande de roulement 7, c6) destinée à refroidir l'ensemble obtenu lors de l'étape c5) dans le deuxième moule 9₃ et c7) destinée à libérer le bandage pneumatique 1 ainsi formé du troisième moule 9₃ selon des effets techniques et avantages identiques ou similaires à la première variante du premier mode de réalisation.

Dans cette deuxième variante non illustrée, lors de la phase c5), un matériau à base d'élastomère thermoplastique pourrait être injecté pour former les flancs extérieurs 5 et un autre matériau à base d'élastomère thermoplastique pour former la bande de roulement 7 afin d'optimiser leurs fonctions respectives, c'est-à-dire que les deux matériaux à base d'élastomère thermoplastique seraient différents et dédiés à leurs fonctions. Plus précisément, les deux types de matériaux seraient injectés dans un interstice unique formé entre l'ensemble carcasse 3 - zones basses 10 et le moule 9₃ de sorte à ce que les fronts de matière se rejoignent entre les zones basses 10 et la future bande de roulement 7 en partant respectivement par des conduite sommet 11₁, 11₂ et des conduites périphériques 11₃, 11₄.

Selon un autre exemple, dans une troisième variante non représentée, l'étape a) est préférentiellement identique à celle des première et deuxième variantes. L'étape b) pourrait par contre comporter les phases b8) destinée à injecter, dans un deuxième moule 9₂, ou moule de zones basses 10, le deuxième matériau à base d'élastomère thermoplastique afin de former des zones basses 10 et des flancs extérieurs 5 sur la carcasse 3, b9) destinée à refroidir l'ensemble obtenu lors de l'étape b8) dans le deuxième moule 9₂ puis b10) destinée à libérer l'ensemble obtenu lors de l'étape b8) du deuxième moule 9₂. La troisième variante pourrait comporter l'étape c) selon les phases c4) destinée à fabriquer au moins une nappe de renfort 8, c8) destinée à injecter, dans un troisième moule 9₃, ou moule de partie supplémentaire, le troisième matériau à base d'élastomère thermoplastique en surmoulant ce troisième matériau sur la nappe de renfort 8 afin de former une bande de roulement 7, c9) destinée à refroidir l'ensemble obtenu lors de l'étape c8) dans le deuxième moule 9₂ puis c10) destinée à libérer le bandage pneumatique 1 ainsi formé du troisième moule 9₃ selon des effets techniques et avantages identiques ou similaires aux premières et deuxième variantes du premier mode de réalisation.

L'invention n'est pas limitée aux modes de réalisation et variantes présentés et d'autres modes de réalisation et variantes apparaîtront clairement à l'homme du métier. Il n'est pas à exclure qu'au moins deux ou plus des étapes a), b) ou c) pourraient être combinées par des injections différenciées et un moule avec un espace intérieur modifiable sans avoir à ouvrir le moule comme par exemple un moule à tiroir.

Il peut également être envisagé une autre variante non représentée dans laquelle on injecte, sur le noyau 12, la gomme intérieure 6, le bourrage tringle et les pieds sommet. Puis, on ajuste la nappe carcasse 2 et les tringles 4 sur l'ensemble formé pour ensuite injecter le protecteur et les flancs extérieurs 5. Enfin, cette variante pourrait comporter un ajustage de la nappe de renfort 8 pour ensuite injecter la bande de roulement 7 selon des effets techniques et avantages identiques ou similaires aux trois autres variantes du premier mode de réalisation.

On comprend également que les matériaux à base d'élastomère thermoplastique peuvent être identiques ou différents. Ainsi, chaque étape a), b) et c) peut utiliser un (ou des) matériau(x) identique(s) ou différent(s) des autres étapes et chaque étape a), b) et c) peut utiliser un (ou des) matériau(x) identique(s) ou différent(s), c'est-à-dire, dans la même étape a), b) ou c), mettre en forme au moins un élément du bandage pneumatique 1 avec un (ou des) matériau(x) identique(s) ou différent(s).

Il est également possible de ne pas utiliser trois moules 9₁, 9₂, 9₃ totalement différents pour mettre en oeuvre les étapes a), b) et c). Ainsi, dans un deuxième mode de réalisation illustré à titre d'exemple aux figures 8 à 11, les trois moules 9₁, 9₂, 9₃ peuvent être formés à partir d'un bâti 16 agencé pour recevoir des éléments amovibles 17 dédiés à chaque étape a), b) et c).

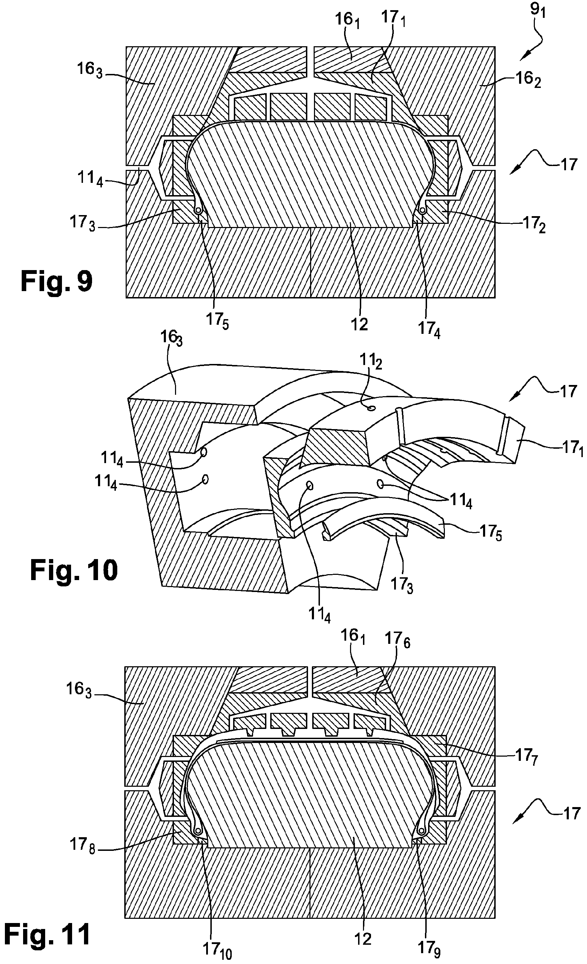

Comme illustré aux figures 8 et 9, le bâti 16 peut ainsi comporter un sommet de bâti 16₁ et des flancs de bâti 16₂, 16₃ formant un espace sensiblement annulaire interne destiné à recevoir le noyau 12 et les éléments amovibles 17. Le sommet du bâti 16₁ comporte des conduites sommets 11₂ et les flancs de bâti 16₂, 16₃ comprennent des conduites périphériques 11₃, 11₄ pour alimenter le moule 9₁, 9₂, 9₃ en matériaux à base d'élastomère thermoplastique à chaque étape.

Un exemple d'éléments amovibles 17 est illustré en perspective à la figure 10. À titre d'exemple, le moule 9₁ pourrait ainsi comporter un tiroir sommet 17₁, des tiroirs de flancs 17₂, 17₃ et des tiroirs de noyau 17₄, 17₅. Les éléments amovibles 17 peuvent donc être changés entre les étapes a), b) et c) et obtenir des effets techniques et avantages identiques ou similaires du premier mode de réalisation et selon les quatre variantes citées avec des avantages identiques ou similaires du premier mode de réalisation. On peut notamment comprendre que les conduites sommets 11₂ et les conduites périphériques 11₃, 11₄ se prolongent alors dans les éléments amovibles 17 comme illustré à la figure 10.

Afin de montrer le bâti 16 avec une deuxième configuration du deuxième mode de réalisation, un exemple de troisième moule 9₃ est illustré à la figure 11. Le bâti 16 peut ainsi comporter un autre tiroir sommet 17₆, des autres tiroirs de flancs 17₇, 17₈ et des autres tiroirs de noyau 17₉, 17₁₀.

## Revendications

1. Procédé de fabrication d'un bandage pneumatique (1) comportant les étapes suivantes :
a) former une carcasse (3) à partir d'au moins un premier matériau à base d'élastomère thermoplastique ;
b) former, sur la carcasse (3), au moins des zones basses (10) à partir d'au moins un deuxième matériau à base d'élastomère thermoplastique ;
**caractérisé en ce que** le procédé comprend, en outre, l'étape suivante :
c) former, sur l'ensemble obtenu lors de l'étape b), une partie supplémentaire à partir d'au moins un troisième matériau à base d'élastomère thermoplastique afin d'obtenir un bandage pneumatique (1) qui comprend une bande de roulement (7) formée lors de l'étape b) ou de l'étape c) à partir d'un matériau à base d'élastomère thermoplastique.

2. Procédé selon la revendication précédente, dans lequel l'étape a) comporte les phases suivantes :
a1) fabriquer une nappe carcasse (2) et deux tringles (4) ;
a2) injecter, dans un moule (9₁) de carcasse (3), le premier matériau à base d'élastomère thermoplastique en surmoulant ce premier matériau autour de la nappe carcasse (2) et des deux tringles (4) afin de former la carcasse (3) ;
a3) refroidir, dans le moule (9₁) de carcasse (3), l'ensemble obtenu lors de l'étape a2) ;
a4) libérer la carcasse (3) ainsi formée du moule (9₁) de carcasse (3).

3. Procédé selon la revendication 1 ou 2, dans lequel l'étape b) comporte les phases suivantes :
b1) fabriquer au moins une nappe de renfort (8) ;
b2) injecter, dans un moule (9₂) de zones basses (10), le deuxième matériau à base d'élastomère thermoplastique en surmoulant ce deuxième matériau sur la nappe de renfort (8) afin de former les zones basses (10) et une bande de roulement (7) sur la carcasse (3) ;
b3) refroidir, dans le moule (9₂) de zones basses (10), l'ensemble obtenu lors de l'étape b2) ;
b4) libérer l'ensemble obtenu lors de l'étape b2) du moule (9₂) de zones basses (10).

4. Procédé selon la revendication précédente, dans lequel l'étape c) comporte les phases suivantes :
c1) injecter, dans un moule (9₃) de partie supplémentaire, le troisième matériau à base d'élastomère thermoplastique afin de former des flancs extérieurs (5) ;
c2) refroidir, dans le moule (9₃) de partie supplémentaire, l'ensemble obtenu lors de l'étape c1) ;
c3) libérer le bandage pneumatique (1) ainsi formé du moule (9₃) de partie supplémentaire.

5. Procédé selon la revendication 1 ou 2, dans lequel l'étape b) comporte les phases suivantes :
b5) injecter, dans un moule (9₂) de zones basses (10), le deuxième matériau à base d'élastomère thermoplastique afin de former les zones basses (10) sur la carcasse (3) ;
b6) refroidir, dans le moule (9₂) de zones basses (10), l'ensemble obtenu lors de l'étape b5) ;
b7) libérer l'ensemble obtenu lors de l'étape b5) du moule (9₂) de zones basses (10).

6. Procédé selon la revendication précédente, dans lequel l'étape c) comporte les phases suivantes :
c4) fabriquer au moins une nappe de renfort (8) ;
c5) injecter, dans un moule (9₃) de partie supplémentaire, le troisième matériau à base d'élastomère thermoplastique en surmoulant ce troisième matériau sur la nappe de renfort (8) afin de former des flancs extérieurs (5) et une bande de roulement (7) ;
c6) refroidir, dans le moule (9₃) de partie supplémentaire, l'ensemble obtenu lors de l'étape c5) ;
c7) libérer le bandage pneumatique (1) ainsi formé du moule (9₃) de partie supplémentaire.

7. Procédé selon la revendication 1 ou 2, dans lequel l'étape b) comporte les phases suivantes :
b8) injecter, dans un moule (9₂) de zones basses (10), le deuxième matériau à base d'élastomère thermoplastique afin de former les zones basses (10) et des flancs extérieurs (5) sur la carcasse (3) ;
b9) refroidir, dans le moule (9₂) de zones basses (10), l'ensemble obtenu lors de l'étape b8) ;
b10) libérer l'ensemble obtenu lors de l'étape b8) du moule (9₂) de zones basses (10).

8. Procédé selon la revendication précédente, dans lequel l'étape c) comporte les phases suivantes :
c4) fabriquer au moins une nappe de renfort (8) ;
c8) injecter, dans un moule (9₃) de partie supplémentaire, le troisième matériau à base d'élastomère thermoplastique en surmoulant ce troisième matériau sur la nappe de renfort (8) afin de former une bande de roulement (7) ;
c9) refroidir, dans le moule (9₃) de partie supplémentaire, l'ensemble obtenu lors de l'étape c8) ;
c10) libérer le bandage pneumatique (1) ainsi formé du moule (9₃) de partie supplémentaire.

9. Procédé selon l'une quelconque des revendications 2 à 8, dans lequel chaque moule (9₁, 9₂, 9₃) est formé à partir d'un bâti (16) agencé pour recevoir des éléments amovibles (17) dédiés à chaque étape a), b) et c).

10. Procédé selon l'une quelconque des revendications 2 à 9, dans lequel chaque moule (9₁, 9₂, 9₃) est maintenu à une température inférieure à 35 degrés Celsius pendant la mise en œuvre du procédé.

11. Procédé selon l'une quelconque des revendications 2 à 10, dans lequel chaque phase de refroidissement permet la rigidification d'au moins la surface externe du matériau à base d'élastomère thermoplastique utilisé en le refroidissant en-dessous d'une température déterminée fonction du matériau à base d'élastomère thermoplastique utilisé.

12. Procédé selon la revendication précédente, dans lequel la température déterminée est la température de transition vitreuse ou la température de fusion du matériau à base d'élastomère thermoplastique utilisé.

## Patentansprüche

1. Verfahren zur Herstellung eines Luftreifens (1) aufweisend die folgenden Schritte:
a) Bilden einer Karkasse (3) aus mindestens einem ersten Material auf Basis von thermoplastischem Elastomer;
b) Bilden, auf der Karkasse (3), von wenigstens Wulstbereichen (10) aus mindestens einem zweiten Material auf Basis von thermoplastischem Elastomer;
**dadurch gekennzeichnet, dass** das Verfahren ferner den folgenden Schritt umfasst:
c) Bilden, auf der beim Schritt b) erhaltenen Anordnung, eines zusätzlichen Abschnitts aus mindestens einem dritten Material auf Basis von thermoplastischem Elastomer, um einen Luftreifen (1) zu erhalten, der einen Laufstreifen (7) umfasst, der beim Schritt b) oder c) aus einem Material auf Basis von thermoplastischem Elastomer gebildet wird.

2. Verfahren nach dem vorhergehenden Anspruch, wobei der Schritt a) die folgenden Phasen aufweist:
a1) Herstellen einer Karkassenlage (2) und zweier Wulstkerne (4);
a2) Einspritzen, in die Form (9₁) der Karkasse (3), des ersten Materials auf Basis von thermoplastischem Elastomer durch Aufformen dieses ersten Materials um die Karkassenlage (2) und die zwei Wulstkerne (4), um die Karkasse (3) zu bilden;
a3) Abkühlen, in der Form (9₁) der Karkasse (3), der Anordnung, die beim Schritt a2) erhalten wird;
a4) Lösen der so gebildeten Karkasse (3) aus der Form (9₁) der Karkasse (3) .

3. Verfahren nach Anspruch 1 oder 2, wobei der Schritt b) die folgenden Phasen aufweist:
b1) Herstellen mindestens einer Verstärkungslage (8);
b2) Einspritzen, in die Form (9₂) der Wulstbereiche (10), des zweiten Materials auf Basis von thermoplastischem Elastomer durch Aufformen dieses zweiten Materials auf die Verstärkungslage (8), um die Wulstbereiche (10) und einen Laufstreifen (7) auf der Karkasse (3) zu bilden;
b3) Abkühlen, in der Form (9₂) der Wulstbereiche (10), der Anordnung, die beim Schritt b2) erhalten wird;
b4) Lösen der Anordnung, die beim Schritt b2) erhalten wird, aus der Form (9₂) der Wulstbereiche (10).

4. Verfahren nach dem vorhergehenden Anspruch, wobei der Schritt c) die folgenden Phasen aufweist:
c1) Einspritzen, in eine Form (9₃) des zusätzlichen Abschnitts, des dritten Materials auf Basis von thermoplastischem Elastomer, um Außenflanken (5) zu bilden;
c2) Abkühlen, in der Form (9₃) des zusätzlichen Abschnitts, der Anordnung, die beim Schritt c1) erhalten wird;
c3) Lösen des so gebildeten Luftreifens (1) aus der Form (9₃) des zusätzlichen Abschnitts.

5. Verfahren nach Anspruch 1 oder 2, wobei der Schritt b) die folgenden Phasen aufweist:
b5) Einspritzen, in die Form (9₂) der Wulstbereiche (10), des zweiten Materials auf Basis von thermoplastischem Elastomer, um die Wulstbereiche (10) auf der Karkasse (3) zu bilden;
b6) Abkühlen, in der Form (9₂) der Wulstbereiche (10), der Anordnung, die beim Schritt b5) erhalten wird;
b7) Lösen der Anordnung, die beim Schritt b5) erhalten wird, aus der Form (9₂) der Wulstbereiche (10).

6. Verfahren nach dem vorhergehenden Anspruch, wobei der Schritt c) die folgenden Phasen aufweist:
c4) Herstellen mindestens einer Verstärkungslage (8);
c5) Einspritzen, in die Form (9₃) des zusätzlichen Abschnitts, des dritten Materials auf Basis von thermoplastischem Elastomer durch Aufformen dieses dritten Materials auf die Verstärkungslage (8), um Außenflanken (5) und einen Laufstreifen (7) zu bilden;
c6) Abkühlen, in der Form (9₃) des zusätzlichen Abschnitts, der Anordnung, die beim Schritt c5) erhalten wird;
c7) Lösen des so gebildeten Luftreifens (1) aus der Form (9₃) des zusätzlichen Abschnitts.

7. Verfahren nach Anspruch 1 oder 2, wobei der Schritt b) die folgenden Phasen aufweist:
b8) Einspritzen, in die Form (9₂) der Wulstbereiche (10), des zweiten Materials auf Basis von thermoplastischem Elastomer, um die Wulstbereiche (10) und die Außenflanken (5) auf der Karkasse (3) zu bilden;
b9) Abkühlen, in der Form (9₂) der Wulstbereiche (10), der Anordnung, die beim Schritt b8) erhalten wird;
b10) Lösen der Anordnung, die beim Schritt b8) erhalten wird, aus der Form (9₂) der Wulstbereiche (10).

8. Verfahren nach dem vorhergehenden Anspruch, wobei der Schritt c) die folgenden Phasen aufweist:
c4) Herstellen mindestens einer Verstärkungslage (8);
c8) Einspritzen, in die Form (9₃) des zusätzlichen Abschnitts, des dritten Materials auf Basis von thermoplastischem Elastomer durch Aufformen dieses dritten Materials auf die Verstärkungslage (8), um einen Laufstreifen (7) zu bilden;
c9) Abkühlen, in der Form (9₃) des zusätzlichen Abschnitts, der Anordnung, die beim Schritt c8) erhalten wird;
c10) Lösen des so gebildeten Luftreifens (1) aus der Form (9₃) des zusätzlichen Abschnitts.

9. Verfahren nach einem der Ansprüche 2 bis 8, wobei jede Form (9₁, 9₂, 9₃) ausgehend von einem Gerüst (16) gebildet ist, das angeordnet ist, abnehmbare Elemente (17) aufzunehmen, die für jeden Schritt a), b) und c) vorgesehen sind.

10. Verfahren nach einem der Ansprüche 2 bis 9, wobei jede Form (9₁, 9₂, 9₃) während der Durchführung des Verfahrens auf einer Temperatur unter 35 Grad Celsius gehalten wird.

11. Verfahren nach einem der Ansprüche 2 bis 10, wobei jede Abkühlungsphase das Erstarren mindestens einer Außenfläche des genutzten Materials auf Basis von thermoplastischem Elastomer gestattet, indem es unter eine bestimmte Temperatur abgekühlt wird, die vom genutzten Material auf Basis von thermoplastischem Elastomer abhängig ist.

12. Verfahren nach dem vorhergehenden Anspruch, wobei die bestimmte Temperatur die Glasübergangstemperatur oder die Schmelztemperatur des genutzten Materials auf Basis von thermoplastischem Elastomer ist.

## Claims

1. Process for manufacturing a tyre (1) comprising the following steps:
a) forming a carcass (3) from at least one first material based on thermoplastic elastomer;
b) forming on the carcass (3) at least bead zones (10) from at least one second material based on thermoplastic elastomer;
**characterized in that** said process further comprises the following step:
c) forming, on the assembly obtained during step b), an additional part from at least one third material based on thermoplastic elastomer in order to obtain a tyre (1) which comprises a tread (7) formed during step b) or step c) from a material based on thermoplastic elastomer.

2. Process according to the preceding claim, in which step a) includes the following phases:
a1) manufacturing a carcass ply (2) and two bead wires (4);
a2) injecting, into a carcass (3) mould (9₁), the first material based on thermoplastic elastomer while overmoulding this first material around the carcass ply (2) and the two bead wires (4) so as to form the carcass (3);
a3) cooling, in the carcass (3) mould (9₁), the assembly obtained during step a2);
a4) releasing the carcass (3) thus formed from the carcass (3) mould (9₁).

3. Process according to Claim 1 or 2, in which step b) includes the following phases:
b1) manufacturing at least one reinforcing ply (8);
b2) injecting, into a bead zone (10) mould (9₂), the second material based on thermoplastic elastomer while overmoulding this second material on the reinforcing ply (8) so as to form the bead zones (10) and a tread (7) on the carcass (3);
b3) cooling, in the bead zone (10) mould (9₂), the assembly obtained during step b2);
b4) releasing the assembly obtained during step b2) from the bead zone (10) mould (9₂).

4. Process according to the preceding claim, in which step c) includes the following phases:
c1) injecting, into an additional part mould (9₃), the third material based on thermoplastic elastomer so as to form exterior sidewalls (5);
c2) cooling, in the additional part mould (9₃), the assembly obtained during step c1);
c3) releasing the tyre (1) thus formed from the additional part mould (9₃).

5. Process according to Claim 1 or 2, in which step b) includes the following phases:
b5) injecting, into a bead zone (10) mould (9₂), the second material based on thermoplastic elastomer so as to form the bead zones (10) on the carcass (3);
b6) cooling, in the bead zone (10) mould (9₂), the assembly obtained during step b5);
b7) releasing the assembly obtained during step b5) from the bead zone (10) mould (9₂).

6. Process according to the preceding claim, in which step c) includes the following phases:
c4) manufacturing at least one reinforcing ply (8);
c5) injecting, into an additional part mould (9₃), the third material based on thermoplastic elastomer while overmoulding this third material on the reinforcing ply (8) so as to form exterior sidewalls (5) and a tread (7);
c6) cooling, in the additional part mould (9₃), the assembly obtained during step c5);
c7) releasing the tyre (1) thus formed from the additional part mould (9₃).

7. Process according to Claim 1 or 2, in which step b) includes the following phases:
b8) injecting, into a bead zone (10) mould (9₂), the second material based on thermoplastic elastomer so as to form the bead zones (10) and exterior sidewalls (5) on the carcass (3);
b9) cooling, in the bead zone (10) mould (9₂), the assembly obtained during step b8);
b10) releasing the assembly obtained during step b8) from the bead zone (10) mould (9₂).

8. Process according to the preceding claim, in which step c) includes the following phases:
c4) manufacturing at least one reinforcing ply (8);
c8) injecting, into an additional part mould (9₃), the third material based on thermoplastic elastomer while overmoulding this third material on the reinforcing ply (8) so as to form a tread (7);
c9) cooling, in the additional part mould (9₃), the assembly obtained during step c8);
c10) releasing the tyre (1) thus formed from the additional part mould (9₃).

9. Process according to any one of Claims 2 to 8, in which each mould (9₁, 9₂, 9₃) is formed from a frame (16) arranged to receive removable elements (17) dedicated to each step a), b) and c).

10. Process according to any one of Claims 2 to 9, in which each mould (9₁, 9₂, 9₃) is maintained at a temperature below 35°C during the implementation of the process.

11. Process according to any one of Claims 2 to 10, in which each cooling phase allows the rigidification of at least the outer surface of the material used based on thermoplastic elastomer by cooling it below a given temperature which is a function of the material used based on thermoplastic elastomer.

12. Process according to the preceding claim, in which the given temperature is the glass transition temperature or the melting point of the material used based on thermoplastic elastomer.
